# EUROPEAN PATENT APPLICATION

(11) **EP 2 887 639 A1**
(43) Date of publication of application: **24.06.2015**
(21) Application number: 13198222.5
(22) Date of filing: 18.12.2013
(51) Int. Cl.: H04N 5/232, G06F 3/01

(54) **Augmented reality information detail**

(71) Applicant: Microsoft Technology Licensing, LLC, Redmond, WA 98052 (US)
(72) Inventor: Kinnebrew, Peter Tobias, Redmond WA 98052-6399 (US); Kamuda, Nicholas, Redmond WA 98052-6399 (US)
(74) Representative: Grünecker Patent- und Rechtsanwälte PartG mbB

(57) **Abstract**

A holographic object presentation system (10) and related methods (300) for presenting a holographic object (36) having a selective information detail level are provided. In one example, a holographic object presentation program (14) may receive user behavior information (74) and physical environment information (60). Using one or more of the user behavior information (74) and the physical environment information (60), the program (14) may adjust the selective information detail level of the holographic object (36) to an adjusted information detail level. The program (14) may then provide the holographic object (36') at the adjusted information detail level to an augmented reality display program (32) for display on a display device (38).

## Description

### BACKGROUND

Augmented reality devices may be used in a variety of real-world environments and contexts to provide a view of the real-world that is augmented by holographic objects and other virtual reality information. Such devices may have access to vast amounts of virtual reality information that may be presented to a user. Depending upon the real-world environment and/or context in which an augmented reality device is being used, presenting too much virtual reality information may annoy or overwhelm a user, making the information difficult to process. In other situations presenting too little virtual reality information may frustrate a user, leading to a less-than-satisfactory user experience.

User interest in certain virtual reality information, such as a particular holographic object, may fluctuate over time. Additionally, changing environmental factors may cause a current level of detail or manner of presentation of a holographic object to be inappropriate or undesirable for a user. Further, different users may have different preferences or comfort levels with respect to the amount and/or manner of presentation of virtual reality information via an augmented reality device.

### SUMMARY

To address the above issues, a holographic object presentation system for presenting a holographic object having a selective information detail level and related methods are provided. In one example, a holographic object presentation program may receive user behavior information and physical environment information. The holographic object presentation program may adjust the selective information detail level of the holographic object to an adjusted information detail level based on one or more of the user behavior information and the physical environment information. The holographic object presentation program may then provide the holographic object at the adjusted information detail level to an augmented reality display program, with the holographic object configured to be displayed on a display device by the augmented reality display program.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a schematic view of a holographic object presentation system according to an embodiment of the present disclosure.
FIG. 2 shows an example head-mounted display device according to an embodiment of the present disclosure.
FIG. 3 is a schematic illustration of the holographic object at the default information detail level of FIG. 1 according to an embodiment of the present disclosure.
FIG. 4 is a table showing one example of the developer-defined information detail levels of FIG. 3.
FIG. 5 is a table showing one example of the developer-defined triggers and corresponding adjusted information detail levels of FIG. 3.
FIG. 6 is a table showing one example of developer-defined triggers, conditions and corresponding adjusted information detail levels of FIG. 3.
FIG. 7 is a table showing one example of the user-defined settings of FIG. 3.
FIG. 8 is a table showing one example of the developer-defined behavioral states of FIG. 3.
FIG. 9 is a schematic view of a physical environment as seen through the head-mounted display device of FIG. 2 showing two holographic objects.
FIG. 10 is a schematic view of the physical environment of FIG. 9 showing one of the holographic objects at a different information detail level and the other holographic object in a different behavioral state.
FIGS. 11A and 11B are a flow chart of a method for presenting a holographic object having a selective information detail level according to an embodiment of the present disclosure.
FIG. 12 is a simplified schematic illustration of an embodiment of a computing device.

### DETAILED DESCRIPTION

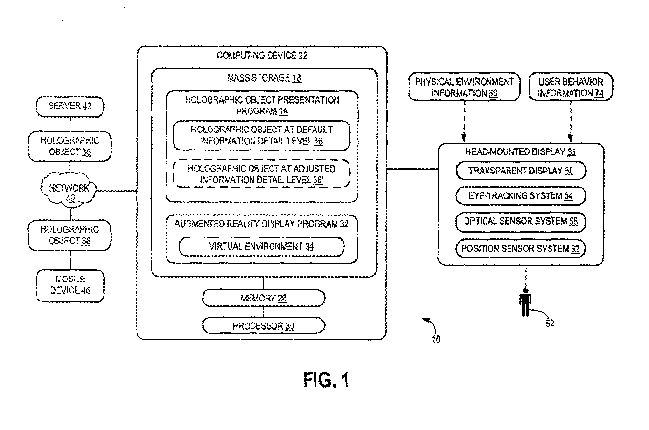

FIG. 1 shows a schematic view of one embodiment of a holographic object presentation system 10 for presenting a holographic object having a selective information detail level. The holographic object presentation system 10 includes a holographic object presentation program 14 that may be stored in mass storage 18 of a computing device 22. The holographic object presentation program 14 may be loaded into memory 26 and executed by a processor 30 of the computing device 22 to perform one or more of the methods and processes described in more detail below.

The holographic object presentation program 14 may include one or more holographic objects having various and selective information detail levels. It will be appreciated that an information detail level of a holographic object may correspond to an amount of visual information presented by or with the holographic object, including but not limited to, various image resolution levels, colors, brightness levels, descriptive visual detail levels, image forms and shapes, textual information, etc.

In one example and as shown in FIG. 1, the holographic object presentation program 14 may include a holographic object 36 having a selective information detail level that may be a default information detail level. As explained in more detail below, the default information detail level may correspond to a developer-defined information detail level that may be set by a developer of the holographic object 36. Also as explained in more detail below, the holographic object presentation program 14 may programmatically adjust the selective information detail level of the holographic object 36 to an adjusted information detail level in an adjusted holographic object 36'. It will also be appreciated that any suitable number of adjusted information detail levels, such as two, three, four, or more adjusted information detail levels, may be included in the holographic object presentation system 10.

In one example, the holographic object presentation system 10 may include an augmented reality display program 32 that may be stored in mass storage 18 of the computing device 22. The augmented reality display program 32 may generate a virtual environment 34 for display on a display device, such as the head-mounted display (HMD) device 38. The virtual environment 34 may include one or more virtual object representations, such as holographic objects. In some examples, the virtual environment 34 may be generated to provide an augmented reality experience in the form of an interactive video game, motion picture experience, or other suitable electronic game or experience. In another example, the augmented reality display program 32 may be stored remotely and may be accessed by the computing device 22 over a network 40 to which the computing device is operatively connected.

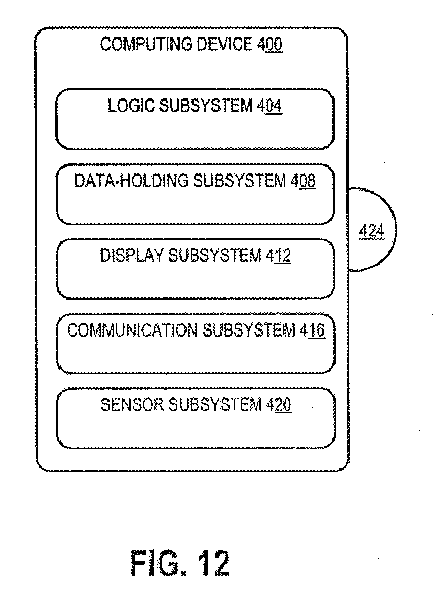

The computing device 22 may take the form of a desktop computing device, a mobile computing device such as a smart phone, laptop, notebook or tablet computer, network computer, home entertainment computer, interactive television, gaming system, or other suitable type of computing device. Additional details regarding the components and computing aspects of the computing device 22 are described in more detail below with reference to FIG. 12.

The computing device 22 may be operatively connected with the HMD device 38 using a wired connection, or may employ a wireless connection via WiFi, Bluetooth, or any other suitable wireless communication protocol. Additionally, the example illustrated in FIG. 1 shows the computing device 22 as a separate component from the HMD device 38. It will be appreciated that in other examples the computing device 22 may be integrated into the HMD device 38.

The computing device 22 also may be operatively connected with one or more additional devices via network 40. In one example, the computing device 22 may communicate with a server 42 and a mobile device 46. Network 40 may take the form of a local area network (LAN), wide area network (WAN), wired network, wireless network, personal area network, or a combination thereof, and may include the Internet.

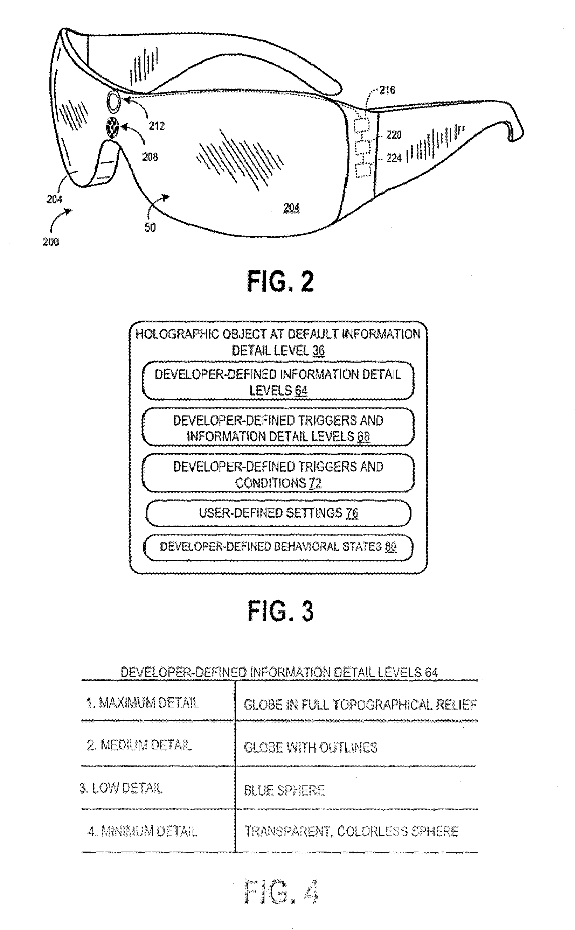

FIG. 2 shows one example of an HMD device 200 in the form of a pair of wearable glasses that include a transparent display 50. In other examples, the HMD device 200 may take other suitable forms in which a transparent, semi-transparent or non-transparent display is supported in front of a viewer's eye or eyes. It will be appreciated that the HMD device 38 shown in FIG. 1 may take the form of the HMD device 200, as described in more detail below, or any other suitable HMD device. Additionally, it will also be appreciated that many other types and configurations of display devices having various form factors may also be used. For example, a hand-held display device that may provide an augmented reality experience may also be used.

With reference to FIGS. 1 and 2, in this example the HMD device 200 includes a transparent display 50 that enables images to be delivered to the eyes of a user 52. The transparent display 50 may be configured to visually augment an appearance of a physical environment to a user viewing the physical environment through the transparent display. For example, the appearance of the physical environment may be augmented by graphical content (e.g., one or more pixels each having a respective color and brightness) that is presented via the transparent display 50.

The transparent display 50 may also be configured to enable a user to view a real-world object in the physical environment through one or more partially transparent pixels that are displaying a virtual object representation. In one example, the transparent display 50 may include image-producing elements located within lenses 204 (such as, for example, a see-through Organic Light-Emitting Diode (OLED) display). As another example, the transparent display 50 may include a light modulator on an edge of the lenses 204. In this example, the lenses 204 may serve as a light guide for delivering light from the light modulator to the eyes of a user.

In other examples, transparent display 50 may support selective filtering of light received from the physical environment before reaching an eye of a user wearing the HMD device 200. Such filtering may be performed on a pixel-by-pixel basis or on groups of pixels. In one example, transparent display 50 may include a first display layer that adds light in the form of one or more illuminated pixels, and a second display layer that filters ambient light received from the physical environment. These layers may have different display resolution, pixel density, and/or display capabilities.

The HMD device may also include various systems and sensors. For example, and with reference also to the HMD device 38 in FIG. 1, the HMD device 200 may include an eye-tracking system 54 that utilizes at least one inward facing sensor 208. The inward facing sensor 208 may be an image sensor that is configured to acquire image data in the form of eye-tracking information from a user's eyes. Provided the user has consented to the acquisition and use of this information, the eye-tracking system 54 may use this information to track the position and/or movement of the user's eyes. The eye-tracking system 54 may then determine where and/or at what real-world or virtual object the user is gazing.

The HMD device 200 may also include an optical sensor system 58 that utilizes at least one outward facing sensor 212, such as an optical sensor. Outward facing sensor 212 may detect movements within its field of view, such as gesture-based inputs or other movements performed by a user or by a person within the field of view. Outward facing sensor 212 may also capture image information and depth information from a physical environment and real-world objects within the environment. For example, outward facing sensor 212 may include a depth camera, a visible light camera, an infrared light camera, and/or a position tracking camera. In some examples, outward facing sensor 212 may include one or more optical sensors for observing visible spectrum and/or infrared light from real-world lighting conditions in the physical environment. Such sensors may include, for example, a charge coupled device image sensor.

As noted above, the HMD device 200 may include depth sensing via one or more depth cameras. Each depth camera may include left and right cameras of a stereoscopic vision system, for example. Time-resolved images from one or more of these depth cameras may be registered to each other and/or to images from another optical sensor such as a visible spectrum camera, and may be combined to yield depth-resolved video.

In some examples, a depth camera may take the form of a structured light depth camera configured to project a structured infrared illumination comprising numerous, discrete features (e.g., lines or points). The depth camera may be configured to image the structured illumination reflected from a scene onto which the structured illumination is projected. A depth map of the scene may be constructed based on spacings between adjacent features in the various regions of an imaged scene.

In other examples, a depth camera may take the form of a time-of-flight depth camera configured to project a pulsed infrared illumination onto a scene. This depth camera may be configured to detect the pulsed illumination reflected from the scene. Two or more of these depth cameras may include electronic shutters synchronized to the pulsed illumination. The integration times for the two or more depth cameras may differ, such that a pixel-resolved time-of-flight of the pulsed illumination, from the source to the scene and then to the depth cameras, is discernable from the relative amounts of light received in corresponding pixels of the two depth cameras. The HMD device 200 may also include an infrared projector to assist in structured light and/or time of flight depth analysis.

In other examples, gesture-based and other motion inputs from the user 52 and/or persons in the physical environment may also be detected via one or more depth cameras. For example, outward facing sensor 212 may include two or more optical sensors with known relative positions for creating depth images. Using motion results from these optical sensors with known relative positions, such depth images may evolve over time.

Outward facing sensor 212 may capture images of a physical environment in which the user 52 is situated. As discussed in more detail below, such images may be part of physical environment information 60 that may be received by the HMD device 38 and provided to the computing device 22. In one example, the augmented reality display program 32 may include a 3D modeling system that uses such input to generate a virtual environment 34 that models the physical environment that is captured.

The HMD device 200 may also include a position sensor system 62 that utilizes one or more motion sensors 216 to enable position tracking and/or orientation sensing of the HMD device 200, and determine a position of the HMD device within a physical environment. As one example, position sensor system 62 may comprise an inertial measurement unit configured as a six-axis or six-degree of freedom position sensor system. This example position sensor system may, for example, include three accelerometers and three gyroscopes to indicate or measure a change in location of the HMD device 200 within three-dimensional space along three orthogonal axes (e.g., x, y, z), and a change in an orientation of the HMD device about the three orthogonal axes (e.g., roll, pitch, yaw).

Position sensor system 62 may support other suitable positioning techniques, such as GPS or other global navigation systems. For example, position sensor system 62 may include a wireless receiver (e.g., a GPS receiver or cellular receiver) to receive wireless signals broadcast from satellites and/or terrestrial base stations. These wireless signals may be used to identify a geographic location of the HMD device 200.

Positioning information obtained from wireless signals received by the HMD device 200 may be combined with positioning information obtained from the motion sensors 216 to provide an indication of location and/or orientation of the HMD device 200. While specific examples of position sensor systems have been described, it will be appreciated that other suitable position sensor systems may be used.

Motion sensors 216 may also be employed as user input devices, such that a user may interact with the HMD device 200 via gestures of the neck and head, or even of the body. Non-limiting examples of motion sensors include an accelerometer, a gyroscope, a compass, and an orientation sensor, which may be included as any combination or subcombination thereof.

The HMD device 200 may also include one or more microphones 220. In some examples, and as described in more detail below, microphones 220 may receive audio input from a user and/or audio input from a physical environment around the user. Additionally or alternatively, one or more microphones separate from the HMD device 200 may be used to receive audio input.

The HMD device 200 may also include a controller 224 having a logic subsystem and a data-holding subsystem, as discussed in more detail below with respect to FIG. 12, that are in communication with the various input and output devices of the HMD device. Briefly, the data-holding subsystem may include instructions that are executable by the logic subsystem, for example, to receive and forward inputs from the sensors to computing device 22 (in unprocessed or processed form) via a communications subsystem, and to present images to the user 52 via the transparent display 50.

It will be appreciated that the HMD device 200 and related sensors and other components described above and illustrated in FIGS. 1 and 2 are provided by way of example. These examples are not intended to be limiting in any manner, as any other suitable sensors, components, and/or combination of sensors and components may be utilized. Therefore it is to be understood that the HMD device 200 may include additional and/or alternative sensors, cameras, microphones, input devices, output devices, etc. without departing from the scope of this disclosure. Further, the physical configuration of the HMD device 200 and its various sensors and subcomponents may take a variety of different forms without departing from the scope of this disclosure.

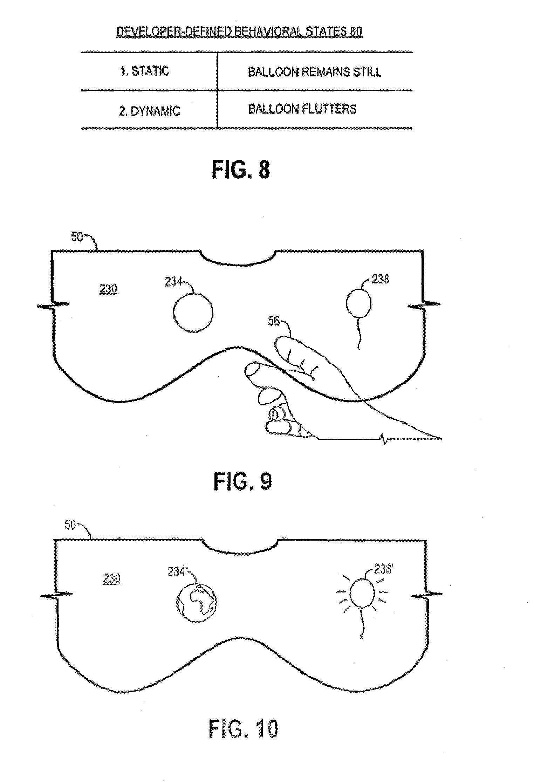

With reference now also to FIGS. 3-10, descriptions of example embodiments and use cases utilizing the holographic object presentation system 10 and HMD device 200 will now be provided. In describing these embodiments and use cases, FIGS. 9 and 10 are provided to show schematic views of a physical environment 230 as seen through the transparent display 50 of the HMD device 200 worn by the user 52.

It will be appreciated that in some examples the holographic object presentation program 14 may receive the holographic object 36 at the default information detail level from the memory 26 of computing device 22. In other examples the holographic object 36 may be received via network 40 from sources external to the computing device 22, such as the server 42 or the mobile device 46.

With reference now to FIGS. 3 and 4, the holographic object 36 may include one or more developer-defined information detail levels 64. In one example shown in FIG. 4, and with reference also to FIGS. 9 and 10, the holographic object 36 may take the form of a spherical globe 234 that represents the earth. A developer of the holographic object 36 may include developer-defined information detail levels 64 that correspond to various levels of information detail displayed by the globe 234.

As shown in FIG. 4, in one example a maximum detail level of the globe 234 may correspond to the globe in full topographic relief, including three-dimensional representations of terrain contours, detailed depictions of bodies of water, forest cover, etc. A medium level of detail may correspond to the globe 234 with less visual information than the maximum detail level, such as the globe 234 with two-dimensional outlines of landmasses and bodies of water. A low level of detail may correspond to the globe 234 with less visual information than the medium level of detail, such as the globe 234 depicted as a solid blue sphere. A minimum level of detail may correspond to the globe 234 with less visual information than the low level of detail, such as the globe 234 depicted as a transparent, colorless sphere. In one example, the default information detail level of the globe 234 may be set to the low level of detail as shown in FIG. 4. It will also be appreciated that in other examples, fewer or more levels of information detail may be provided for a holographic object 36.

With reference again to FIGS. 1 and 2, as mentioned above one or more of the various sensors and systems of the HMD device 200 may receive user behavior information 74 and/or physical environment information 60. In some examples, the user behavior information 74 may include speech recognition information, eye-tracking information, head pose information, user movement information, and user gesture information. The physical environment information 60 may include, for example, light information, physical object proximity information, and physical object speed information.

As explained in more detail below, based on one or more of the user behavior information 74 and the physical environment information 60, the holographic object presentation system 10 may adjust the selective information detail level of the holographic object 36 to an adjusted information detail level represented in holographic object 36'. The holographic object presentation system 10 may then provide the holographic object 36' at the adjusted information detail level to the augmented reality display program 32, with the holographic object 36' configured to be displayed on the HMD device 200.

In one example and with reference to FIG. 9, the globe 234 may be initially displayed at a default information detail level, such as the low information detail level corresponding to a solid blue sphere as indicated in the table of FIG. 4. A developer-defined trigger corresponding to physical environment information 60 and/or user behavior information 74 may also be associated with the globe 234. In one example, based on one or more of the speech recognition information, eye-tracking information, head pose information, user movement information and user gesture information, the holographic object presentation program 14 may be configured to detect an increasing interest trigger that suggests that the user 52 may have an increasing level of interest in a holographic object. Based on detecting the increasing interest trigger, the holographic object presentation program 14 may increase the selective information detail level of the holographic object.

In one example, the holographic object presentation program 14 may detect in eye-tracking information received from the eye-tracking system 54 that the user 52 is gazing at the globe 234. Based on detecting the user's gaze, the holographic object presentation program 14 may increase the default information detail level of the globe 234 from the low information detail level to the medium information detail level corresponding to a globe 234' with landmass and body of water outlines, as shown in FIG. 10.

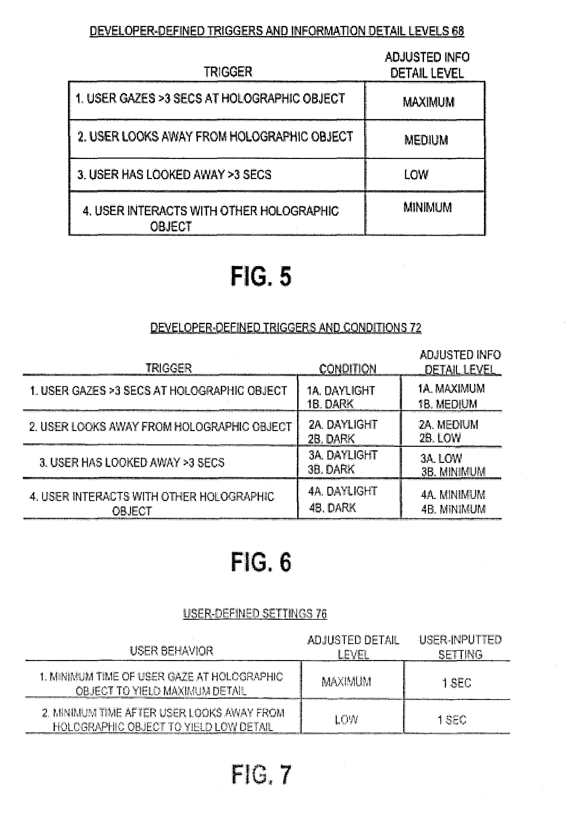

With reference now to FIG. 5, a table 68 includes four other examples of developer-defined triggers and corresponding information detail levels that are related to the user's gaze. A first trigger may be defined as a user gazing at a holographic object for more than 3 seconds. When this trigger is detected, the holographic object presentation program 14 may adjust the information detail of the object to a maximum level of detail. It will be appreciated that this first trigger may correspond to an increasing interest trigger suggesting that the user's interest in the object is increasing.

With continued reference to the table 68, a second trigger may be defined as a user looking away from a holographic object at which the user had been gazing. When this trigger is detected, the holographic object presentation program 14 may adjust the information detail of the object to a medium level of detail. A third trigger may be defined as a user having looked away from the holographic object for more than 3 seconds. When this trigger is detected, the holographic object presentation program 14 may adjust the information detail of the object to a low level of detail. A fourth trigger may be defined as a user interacting with a different holographic object. When this trigger is detected, the holographic object presentation program 14 may adjust the information detail of the previous object to a minimum level of detail.

It will be appreciated that the second, third and fourth triggers described above may correspond to a decreasing interest trigger suggesting that the user's interest in the object is decreasing. It will also be appreciated that many other types of triggers, associated user behavior information 74 and/or physical environment information 60, and values associated with a trigger may be utilized.

In another example, two or more developer-defined conditions may be associated with each developer-defined trigger, with each condition corresponding to a particular information detail level. With reference now to FIG. 6, in one example a table 72 includes the four developer-defined triggers of FIG. 5 and two possible conditions for each of the triggers. For each condition a corresponding adjusted information detail level is provided. In the example shown in FIG. 6, a physical environment lighting condition may be detected and categorized as either daylight or dark. Regarding the first trigger, when a user gazes at the holographic object for more than 3 seconds, if the condition detected is daylight then the holographic object presentation program 14 may provide the object at the maximum level of detail. If the condition detected is dark, then the holographic object presentation program 14 may provide the object at the medium level of detail.

Regarding the second trigger, when the user looks away from the object, if the condition detected is daylight then the holographic object presentation program 14 may adjust the information detail of the object to the medium level of detail. If the condition detected is dark, then the holographic object presentation program 14 may adjust the information detail of the object to the low level of detail. Regarding the third trigger, when the user has looked away from the object for more than 3 seconds, if the condition detected is daylight then the holographic object presentation program 14 may adjust the information detail of the object to the low level of detail. If the condition detected is dark, then the holographic object presentation program 14 may adjust the information detail of the object to the minimum level of detail. Regarding the fourth trigger, when the user interacts with another holographic object, regardless of whether the condition detected is daylight or dark, the holographic object presentation program 14 may adjust the information detail of the previous object to the minimum level of detail.

Advantageously, in this example a developer may further control the information detail levels of a holographic object based on physical environment conditions a user may be experiencing. It will be appreciated that many other types of conditions may be utilized to adjust information detail levels. Such conditions may include, but are not limited to, other user behaviors, other physical environment conditions such as noise level and weather, number and/or proximity of other objects or persons, physiological state of a user, number and/or proximity of other holographic objects in the virtual environment, etc.

In another example, one or more user-defined settings may be associated with a developer-defined trigger, with each user-defined setting determining a parameter for adjusting the information detail level of a holographic object. In one example and with reference to FIG. 7, a table 76 includes two user-defined settings that are associated with certain user behaviors. A first user-defined setting may relate to a minimum time of a user gaze at a holographic object to yield a maximum information detail level. In this example, an experienced user who is familiar with interacting with holographic objects via the holographic object presentation program 14 may input a user-defined setting value of 1 second. Thus, when a user gazes at a holographic object for 1 second, the holographic object presentation program 14 adjusts the information detail level to the maximum level. In another example, a novice user who is less familiar with using the holographic object presentation program 14 may input a longer user-defined setting value of, for example, 4 seconds.

With continued reference to FIG. 7, a second user-defined setting may relate to a minimum time after a user looks away from a holographic object to yield a low information detail level. In this example, an experienced user may input a user-defined setting value of 1 second. Thus, when a user looks away from a holographic object, after 1 second the holographic object presentation program 14 adjusts the information detail level to the low level. In another example, a novice user who is less familiar with using the holographic object presentation program 14 may input a longer user-defined setting value of, for example, 2 seconds. It will be appreciated that a user-defined setting value may override a corresponding setting in a developer-defined trigger.

In another example of an increasing interest trigger, and with reference again to FIGS. 9 and 10, the holographic object presentation program 14 may detect in user movement information received from the position sensor system 62 that the user 52 is moving towards the globe 234. Based on detecting the user's movement, the holographic object presentation program 14 may increase the default information detail level of the globe 234 from the low detail information level to the medium detail information level corresponding to a globe 234' shown in FIG. 9.

In another example of an increasing interest trigger, and with reference again to FIGS. 9 and 10, the holographic object presentation program 14 may detect in user gesture information received from the optical sensor system 58 that the user 52 is gesturing towards the globe 234. For example, the user 52 may point a finger 56 at the globe 234. Based on detecting a user gesture that suggests increasing interest in the globe 234, the holographic object presentation program 14 may increase the default information detail level of the globe 234 from the low detail information level to the medium detail information level corresponding to a globe 234' shown in FIG. 10. It will be appreciated that many other types and forms of user gestures, such as nodding towards the globe 234, may be detected and used to infer an increasing interest of the user 52 in the globe 234.

In still another example of an increasing interest trigger, the holographic object presentation program 14 may detect a verbal cue in speech recognition information received from the microphone 220 that suggests an increasing interest level of the user in the globe 234. For example, the user 52 may say, "How beautiful the earth looks." Based on detecting such a verbal cue, the holographic object presentation program 14 may increase the default information detail level of the globe 234. It will be appreciated that many other examples of verbal cues may be detected and used to infer an increasing interest of the user 52 in the globe 234.

In another example, one or more developer-defined holographic object behavioral states may be provided for a holographic object. With reference to FIG. 9, in one example a holographic object in the form of a balloon 238 may be displayed on the transparent display 50 of the HMD device 200. As shown in the table 80 of FIG. 8, two different developer-defined behavioral states of the balloon 238 may be provided. In a first, static behavior state, the balloon 238 may appear still to the user 52. In a second, dynamic behavior state, and as shown in FIG. 10, the balloon 238' may appear to flutter as if buffeted by the wind.

It will be appreciated that the developer-defined holographic object behavioral states may be invoked by a variety of user behaviors, physical environment conditions, virtual environment parameters, and/or other factors. It will also be appreciated that many different forms of developer-defined holographic object behavioral states may be provided for a variety of holographic objects.

In other examples, the holographic object presentation system 10 may use the physical environment information 60 received from a physical environment 230 to adjust the selective information detail level of the holographic object 36 to an adjusted information detail level of holographic object 36'. In one example where the physical environment information 60 includes physical object proximity information, the holographic object presentation program 14 may adjust the information detail level of a holographic object to a lower detail level when another person moves within a specified distance from the user 52 such as, for example, within a 3 foot radius.

In another example where the physical environment information 60 includes external audio information, the holographic object presentation program 14 may adjust the information detail level of a holographic object to a lower detail level when audio information that may be of importance to a user is detected. In one example, such audio information may include an announcement in an airport regarding a user's scheduled flight. In another example where the physical environment information 60 includes physical object speed information, the holographic object presentation program 14 may adjust the information detail level of a holographic object to a lower detail level when an external object is detected as travelling toward the user 52 at a speed above a threshold. In one example, where a real-world baseball is detected as travelling toward the user 52 at a speed above 15 km/hr, the holographic object presentation program 14 may adjust the selective information detail level of the holographic object 36 to a lower detail level. It will be appreciated that many other examples of physical environment information 60 may be used to adjust the selective information detail level of the holographic object 36 to an adjusted information detail level, whether a higher or lower detail level.

In some examples, a lower information detail level may correspond to a higher transparency of the holographic object as compared to a higher information detail level. Similarly, a higher information detail level may correspond to a higher opacity of the holographic object as compared to a lower information detail level. In other examples, adjusting the information detail level of a holographic object may include changing the form or shape of the holographic object. For example, a minimum information detail level of a person may correspond to a stick figure icon, while a low detail information level of that person may correspond to a two-dimensional figure with a face.

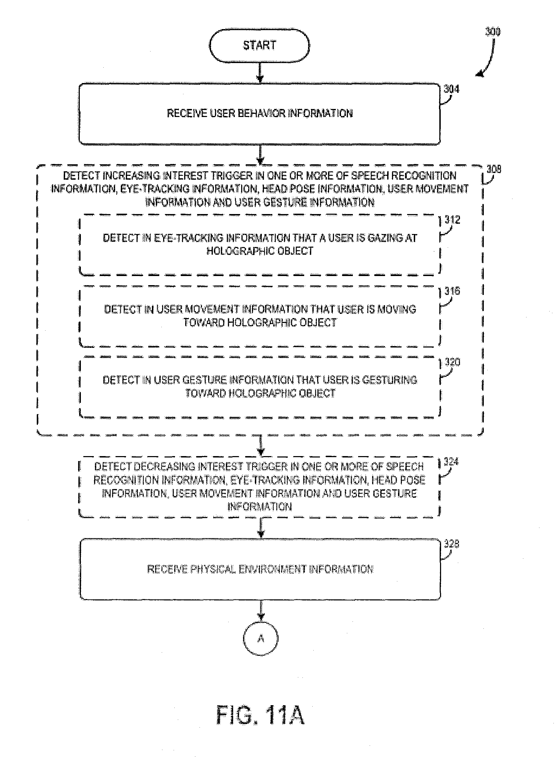

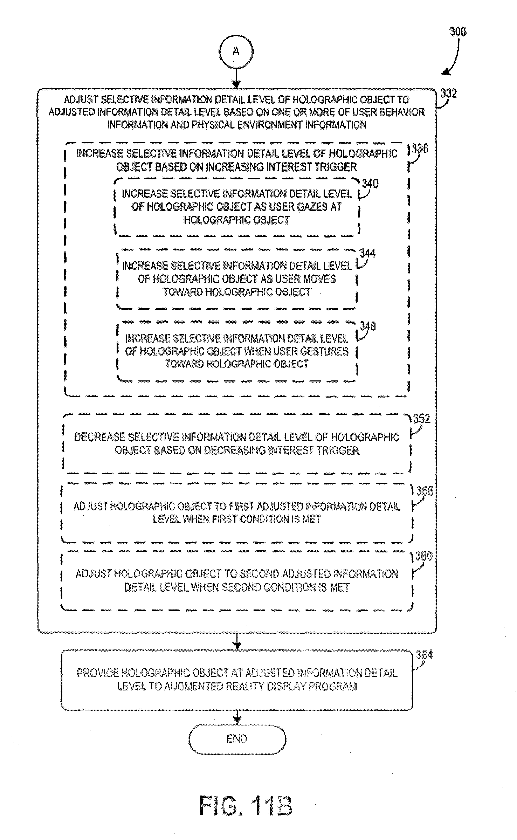

FIGS. 11A and 11B illustrate a flow chart of a method 300 for presenting a holographic object having a selective information detail level according to an embodiment of the present disclosure. The following description of method 300 is provided with reference to the software and hardware components of the holographic object presentation system 10 described above and shown in FIG. 1. It will be appreciated that method 300 may also be performed in other contexts using other suitable hardware and software components.

With reference to FIG. 11A, at 304 the method may include receiving user behavior information 74, such as speech recognition information, eye-tracking information, head pose information, user movement information and user gesture information. At 308 the method may include detecting an increasing interest trigger in one or more of the speech recognition information, eye-tracking information, head pose information, user movement information and user gesture information. In one example, at 312 the method may include detecting in eye-tracking information that a user is gazing at a holographic object. In another example, at 316 the method may include detecting in user movement information that a user is moving toward a holographic object. In still another example, at 320 the method may include detecting in user gesture information that a user is gesturing toward a holographic object.

At 324 the method may include detecting a decreasing interest trigger in one or more of speech recognition information, eye-tracking information, head pose information, user movement information and user gesture information. At 328 the method may also include receiving physical environment information 60.

At 332 the method may include adjusting the selective information detail level of the holographic object to an adjusted information detail level based on one or more of the user behavior information 74 and the physical environment information 60. In one example, at 336 the method may include increasing the selective information detail level of the holographic object based on detecting an increasing interest trigger. For example, at 340 the method may include increasing the selective information detail level of the holographic object as a user gazes at the holographic object. In another example, at 344 the method may include increasing the selective information detail level of the holographic object as a user moves toward the holographic object. In still another example, at 348 the method may include increasing the selective information detail level of the holographic object when a user gestures toward the holographic object.

In another example, at 352 the method may include decreasing the selective information detail level of the holographic object based on detecting a decreasing interest trigger.

At 356 the method may include adjusting the selective information detail level of the holographic object to a first adjusted information detail level when a first condition is met. At 360 the method may include adjusting the selective information detail level of the holographic object to a second adjusted information detail level when a second condition is met. At 364 the method may include providing the holographic object at an adjusted information detail level to an augmented reality display program 32 for display on the HMD device 200.

FIG. 12 schematically shows a nonlimiting embodiment of a computing device 400 that may perform one or more of the above described methods and processes. Computing device 400 is shown in simplified form. It is to be understood that virtually any computer architecture may be used without departing from the scope of this disclosure. In different embodiments, computing device 400 may take the form of a mainframe computer, server computer, desktop computer, laptop computer, tablet computer, home entertainment computer, network computing device, mobile computing device, mobile communication device, gaming device, etc.

As shown in FIG. 12, computing device 400 includes a logic subsystem 404, a data-holding subsystem 408, a display subsystem 412, a communication subsystem 416, and a sensor subsystem 420. Computing device 400 may optionally include other subsystems and components not shown in FIG. 12. Computing device 400 may also optionally include other user input devices such as keyboards, mice, game controllers, and/or touch screens, for example. Further, in some embodiments the methods and processes described herein may be implemented as a computer application, computer service, computer API, computer library, and/or other computer program product in a computing system that includes one or more computers.

Logic subsystem 404 may include one or more physical devices configured to execute one or more instructions. For example, the logic subsystem may be configured to execute one or more instructions that are part of one or more applications, services, programs, routines, libraries, objects, components, data structures, or other logical constructs. Such instructions may be implemented to perform a task, implement a data type, transform the state of one or more devices, or otherwise arrive at a desired result.

The logic subsystem 404 may include one or more processors that are configured to execute software instructions. Additionally or alternatively, the logic subsystem may include one or more hardware or firmware logic machines configured to execute hardware or firmware instructions. Processors of the logic subsystem may be single core or multicore, and the programs executed thereon may be configured for parallel or distributed processing. The logic subsystem may optionally include individual components that are distributed throughout two or more devices, which may be remotely located and/or configured for coordinated processing. One or more aspects of the logic subsystem may be virtualized and executed by remotely accessible networked computing devices configured in a cloud computing configuration.

Data-holding subsystem 408 may include one or more physical, non-transitory devices configured to hold data and/or instructions executable by the logic subsystem 404 to implement the herein described methods and processes. When such methods and processes are implemented, the state of data-holding subsystem 408 may be transformed (e.g., to hold different data).

Data-holding subsystem 408 may include removable media and/or built-in devices. Data-holding subsystem 408 may include optical memory devices (e.g., CD, DVD, HD-DVD, Blu-Ray Disc, etc.), semiconductor memory devices (e.g., RAM, EPROM, EEPROM, etc.) and/or magnetic memory devices (e.g., hard disk drive, floppy disk drive, tape drive, MRAM, etc.), among others. Data-holding subsystem 408 may include devices with one or more of the following characteristics: volatile, nonvolatile, dynamic, static, read/write, read-only, random access, sequential access, location addressable, file addressable, and content addressable. In some embodiments, logic subsystem 404 and data-holding subsystem 408 may be integrated into one or more common devices, such as an application specific integrated circuit or a system on a chip.

FIG. 12 also shows an aspect of the data-holding subsystem 408 in the form of removable computer-readable storage media 424, which may be used to store and/or transfer data and/or instructions executable to implement the methods and processes described herein. Removable computer-readable storage media 424 may take the form of CDs, DVDs, HD-DVDs, Blu-Ray Discs, EEPROMs, and/or floppy disks, among others.

It is to be appreciated that data-holding subsystem 408 includes one or more physical, non-transitory devices. In contrast, in some embodiments aspects of the instructions described herein may be propagated in a transitory fashion by a pure signal (e.g., an electromagnetic signal, an optical signal, etc.) that is not held by a physical device for at least a finite duration. Furthermore, data and/or other forms of information pertaining to the present disclosure may be propagated by a pure signal.

Display subsystem 412 may be used to present a visual representation of data held by data-holding subsystem 408. Display subsystem 412 may include, for example, the transparent display 50 of the HMD device 200. As the above described methods and processes change the data held by the data-holding subsystem 408, and thus transform the state of the data-holding subsystem, the state of the display subsystem 412 may likewise be transformed to visually represent changes in the underlying data. The display subsystem 412 may include one or more display devices utilizing virtually any type of technology. Such display devices may be combined with logic subsystem 404 and/or data-holding subsystem 408 in a shared enclosure, or such display devices may be peripheral display devices.

Communication subsystem 416 may be configured to communicatively couple computing device 400 with one or more networks, such as network 40, and/or one or more other computing devices. Communication subsystem 416 may include wired and/or wireless communication devices compatible with one or more different communication protocols. As nonlimiting examples, the communication subsystem 416 may be configured for communication via a wireless telephone network, a wireless local area network, a wired local area network, a wireless wide area network, a wired wide area network, etc. In some embodiments, the communication subsystem may allow computing device 400 to send and/or receive messages to and/or from other devices via a network such as the Internet.

Sensor subsystem 420 may include one or more sensors configured to sense different physical phenomenon (e.g., visible light, infrared light, sound, acceleration, orientation, position, etc.) as described above. For example, the sensor subsystem 420 may comprise one or more eye-tracking sensors, image sensors, microphones, motion sensors such as accelerometers, touch pads, touch screens, and/or any other suitable sensors. Sensor subsystem 420 may be configured to provide observation information to logic subsystem 404, for example. As described above, observation information such as eye-tracking information, image information, audio information, ambient lighting information, depth information, position information, motion information, and/or any other suitable sensor data may be used to perform the methods and processes described above.

The term "program" may be used to describe an aspect of the holographic object presentation system 10 that is implemented to perform one or more particular functions. In some cases, such a program may be instantiated via logic subsystem 404 executing instructions held by data-holding subsystem 408. It is to be understood that different programs may be instantiated from the same application, service, code block, object, library, routine, API, function, etc. Likewise, the same program may be instantiated by different applications, services, code blocks, objects, routines, APIs, functions, etc. The term "program" is meant to encompass individual or groups of executable files, data files, libraries, drivers, scripts, database records, etc.

It is to be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated may be performed in the sequence illustrated, in other sequences, in parallel, or in some cases omitted. Likewise, the order of the above-described processes may be changed.

The subject matter of the present disclosure includes all novel and nonobvious combinations and subcombinations of the various processes, systems and configurations, and other features, functions, acts, and/or properties disclosed herein, as well as any and all equivalents thereof.

## Claims

1. A holographic object presentation system (10) for presenting a holographic object (36) having a selective information detail level, the holographic object presentation system (10) comprising:
a holographic object presentation program (14) executed by a processor (30) of a computing device (22), the holographic object presentation program (14) configured to:
receive user behavior information (74);
receive physical environment information (60);
adjust the selective information detail level of the holographic object (36) to an adjusted information detail level based on one or more of the user behavior information (74) and the physical environment information (60); and
provide the holographic object (36') at the adjusted information detail level to an augmented reality display program (32), wherein the holographic object (36') is configured to be displayed on a display device (38) by the augmented reality display program (32).

2. The holographic object presentation system of claim 1, wherein the user behavior information includes one or more of speech recognition information, eye-tracking information, head pose information, user movement information and user gesture information, and wherein the holographic object presentation program is further configured to:
detect an increasing interest trigger in one or more of the speech recognition information, the eye-tracking information, the head pose information, the user movement information and the user gesture information; and
increase the selective information detail level of the holographic object based on the increasing interest trigger.

3. The holographic object presentation system of claim 1 or 2, wherein the holographic object presentation program is further configured to:
detect a decreasing interest trigger in one or more of the speech recognition information, the eye-tracking information, the head pose information, the user movement information and the user gesture information; and
decrease the selective information detail level of the holographic object based on the decreasing interest trigger.

4. The holographic object presentation system of any one of claims 1 to 3, wherein the user behavior information includes the user movement information, and wherein the holographic object presentation program is further configured to:
detect in the user movement information a user movement toward the holographic object; and
increase the selective information detail level of the holographic object as the user moves toward the holographic object.

5. The holographic object presentation system of any one of claims 1 to 4, wherein the display device comprises a head-mounted display device operatively connected to the computing device.

6. A method (300) for presenting a holographic object (36) having a selective information detail level, comprising:
receiving (304) user behavior information (74);
receiving (328) physical environment information (60);
adjusting (332) the selective information detail level of the holographic object (36) to an adjusted information detail level based on one or more of the user behavior information (74) and the physical environment information (60); and
providing (364) the holographic object (36') at the adjusted information detail level to an augmented reality display program (32), wherein the holographic object (36') is configured to be displayed on a display device (38) by the augmented reality display program (32).

7. The method of claim 6, wherein the adjusted information detail level comprises a first adjusted information detail level corresponding to a first condition and a second adjusted information detail level corresponding to a second condition, the method further comprising:
providing the holographic object at the first adjusted information detail level when the first condition is met; and
providing the holographic object at the second adjusted information detail level when the second condition is met.

8. The method of claim 6 or 7, wherein the user behavior information includes the eye-tracking information, the method further comprising:
detecting in the eye-tracking information that a user is gazing at the holographic object; and
increasing the selective information detail level of the holographic object.

9. The method of any one of claim 6 to 8, wherein the user behavior information includes the user gesture information, the method further comprising:
detecting in the user gesture information that a user is gesturing toward the holographic object; and
increasing the selective information detail level of the holographic object when the user gestures toward the holographic object.

10. The method of any one of claims 6 to 9, wherein the user behavior information includes the speech recognition information, the method further comprising:
detecting a verbal cue in the speech recognition information; and
increasing the selective information detail level of the holographic object based on the verbal cue.
